# EUROPÄISCHE PATENTSCHRIFT

(11) **EP 1 623 441 B1**
(45) Veröffentlichungstag und Bekanntmachung des Hinweises auf die Patenterteilung: **10.06.2009**
(21) Anmeldenummer: 04718223.3
(22) Anmeldetag: 08.03.2004
(51) Int. Cl.: H01H 71/08, H02B 1/20

(54) **BEFESTIGUNGSVORRICHTUNG INSBESONDERE FÜR SCHUTZSCHALTER**
FIXING DEVICE, IN PARTICULAR FOR A SAFETY SWITCH
DISPOSITIF DE FIXATION, NOTAMMENT POUR DISJONCTEUR DE PROTECTION

(30) Priorität: 07.05.2003 AT 6902003
(43) Veröffentlichungstag der Anmeldung: 08.02.2006
(73) Patentinhaber: Moeller Gebäudeautomation KG, 3943 Schrems (AT)
(72) Erfinder: GEGENBAUER, Bernhard, A-3830 Waidhofen/Thaya (AT)
(74) Vertreter: Gibler, Ferdinand
(86) Internationale Anmeldenummer: PCT/AT2004/000078
(87) Internationale Veröffentlichungsnummer: WO 2004/100199

(56) Entgegenhaltungen:
- EP-A- 0 272 872
- EP-A- 0 311 952
- EP-A- 0 798 835
- EP-A- 1 137 035
- DE-U- 1 972 560
- DE-U- 20 306 230
- DE-U- 29 503 368
- DE-U- 29 518 559
- GB-A- 2 064 225

## Beschreibung

Die Erfindung betrifft eine Befestigungsvorrichtung für elektrische Betriebsmittel mit einer im wesentlichen schwalbenschwanzförmigen Ausnehmung, insbesondere Schutzschalter od. dgl., mit einem länglichen, insbesondere balkenförmigen, ersten Befestigungselement für die Aufnahme einer Hauptverschienung od. dgl. und einem länglichen, insbesondere balkenförmigen, zweiten Befestigungselement, wobei das zweite Befestigungselement im Profil wenigstens eine Nase aufweist.

Befestigungsvorrichtung für elektrische Betriebsmittel, insbesondere Schutzschalter od. dgl., mit einem ersten Befestigungselement für die Aufnahme einer Hauptverschienung od. dgl., wobei die Hauptverschienung zungenförmige Fortsätze aufweist, und einem wenigstens eine Nase aufweisenden zweiten Befestigungselement.

Bekannte derartige Befestigungsvorrichtungen weisen eine in einem auf einer Montageplatte befestigten Gehäuse angeordnete Hauptverschienung mit zungenförmigen Fortsätzen auf, wobei die zungenförmigen Fortsätze aus dem Gehäuse ragen. Die Hauptverschienung weist weiters einen -Zentraleinspeisungsanschluß auf. Weiters ist auf der Montageplatte ein Winkel angeordnet, wobei elektrische Betriebsmittel mit dem Winkel und den zungenförmigen Fortsätzen befestigt werden können. Nachteilig an diesen bekannten Befestigungsvorrichtungen ist, daß die Anordnung der Hauptverschienung nicht verändert werden kann und komplexe Schaltungen, bei denen die Ausgänge eines elektrischen Betriebsmittels mit den Eingängen eines anderen elektrischen Betriebsmittels elektrisch leitend verbunden sind, nicht einfach ausgebildet werden können.

Aus der EP 0 798 835 A1 ist eine Befestigungsvorrichtung bekannt, bei der die Betriebsmittel auf eine Hutprofilschiene aufgesetzt werden und anschließend eine Hauptverschienung angebracht wird.

Die EP 0 311 952 A2 offenbart eine Befestigungsvorrichtung, bei der die Betriebsmittel ebenfalls auf eine Hutprofilschiene aufgesetzt und anschließend mit einer Hauptverschienung verbunden werden.

Die EP 0 272 872 A2 betrifft eine Halterung für eine Hauptverschienung, wobei die Betriebsmittel auf einer Hutprofilschiene befestigt sind und die Halterung ebenfalls an der Hutprofilschiene befestigt ist.

Aus der GB 2 064 225 A ist eine Befestigungsvorrichtung bekannt, bei der die Betriebsmittel in einen Rahmen eingesetzt und mit einer Hauptverschienung mit Ausnehmung für Schrauben verschraubt werden.

Die DE 203 06 230 U1 offenbart ein Sammelschienensystem, bei der die Betriebsmittel auf einer Hutprofilschiene befestigt werden.

Die DE 295 18 559 U1 betrifft einen Phasenkamm, mit dem auf einer Befestigungsschiene befestigte Betriebsmittel miteinander leitend verbunden werden können.

Aus der EP 1 137 035 A1 geht eine Anschlussmöglichkeit für Betriebsmittel hervor, bei der auf einer Befestigungsschiene befestigte Betriebsmittel mit mehreren Hauptverschienungen verbunden werden können.

Auch die DE 295 03 368 U1 betrifft einen Phasenkamm, mit dem auf einer Befestigungsschiene befestigte Betriebsmittel miteinander leitend verbunden werden können.

Aus der DE 1 972 560 U geht eine Anschlussmöglichkeit für Betriebsmittel hervor, bei der auf einer Befestigungsschiene befestigte Betriebsmittel mit mehreren Hauptverschienungen verbunden werden können.

Aufgabe der vorliegenden Erfindung ist es, eine Befestigungsvorrichtung der eingangs genannten Art anzugeben, bei der die bekannten Nachteile vermieden werden und mit der eine Vielzahl an Schaltungen einfach durchführbar ist und bei der auch ein Auswechseln einzelner elektrischer Betriebsmittel und/oder eine Umgruppierung und/oder eine Funktionsänderung der elektrischen Betriebsmittel einfach und schnell durchgeführt werden kann.

Eine weitere Aufgabe der Erfindung ist es, eine Befestigungsvorrichtung anzugeben, bei der elektrische Betriebsmittel einfach zu Funktionseinheiten zusammengefaßt werden können, wobei eine Hauptverschienung vorgesehen ist.

Erfindungsgemäß wird dies dadurch erreicht, daß die Hauptverschienung zungenförmige Fortsätze aufweist und daß das zweite Befestigungselement für den Eingriff mit lediglich einem Rand der Ausnehmung eines der elektrischen Betriebsmittel vorgesehen ist.

Dadurch ergibt sich der Vorteil, daß auf der Seite der Hauptverschienung weitere Anschlüsse der elektrischen Betriebsmittel zugänglich sind, wodurch die Variabilität der möglichen Konfigurationen der elektrischen Betriebsmittel erhöht wird und auch komplexe Schaltungen einfach realisiert werden können. Weiters kann die Hauptverschienung frei zugänglich und lösbar mit dem ersten Befestigungselement verbunden sein, wodurch sie auf einfache Weise an die jeweiligen Erfordernisse adaptiert werden kann, wobei eine Veränderung der Hauptverschienung und/oder ein Auswechseln der gesamten Hauptverschienung vorgesehen sein kann. Weiters kann die Möglichkeit einer Auftrennung der Hauptverschienung mit mehreren Einspeisepunkten vorgesehen sein.

Mehrere elektrische Betriebsmittel können einfach in einer Befestigungsvorrichtung zu Funktionseinheiten mit integrierter Hauptverschienung zusammengefaßt werden, wobei die elektrischen Betriebsmittel einzeln, einfach und schnell von der Befestigungsvorrichtung gelöst und/oder mit dieser verbunden werden können. Weiters kann vorgesehen sein, daß die Befestigungsvorrichtungen lösbar an einer Grundplatte od. dgl. befestigbar sind, wodurch ein modularer Aufbau in einem Schaltschrank od. dgl. erreicht wird. Dadurch können Installationsarbeiten und/oder Reparaturen einfach und schnell durchgeführt werden.

Durch die balkenförmige Ausbildung des zweiten Befestigungselementes kann eine gute Zugänglichkeit der elektrischen Betriebsmittel sichergestellt werden. Weiters können auf einfache Weise Leitungsführungsbereiche ausgebildet werden, die eine einfache und übersichtliche Verdrahtung ermöglichen.

Gemäß einer anderen Ausführungsform der Erfindung kann vorgesehen sein, daß der Querschnitt des zweiten Befestigungselements im wesentlichen ein L-Profil aufweist. Dadurch können bekannte elektrische Betriebsmittel, welche eine im wesentlichen schwalbenschwanzförmige Ausnehmung aufweisen auf das zweite Befestigungselement aufgesetzt werden. Durch die Befestigung mit der Hauptverschienung ergibt sich eine sichere Befestigung des elektrischen Betriebsmittels mit der Befestigungsvorrichtung, wobei jedes elektrische Betriebsmittel einzeln ausgewechselt werden kann, wobei benachbarte elektrische Betriebsmittel angeschlossen bleiben können.

Gemäß einer weiteren Ausgestaltung der Erfindung kann vorgesehen sein, daß zumindest ein Rippenelement vorgesehen ist, das mit dem ersten Befestigungselement und dem zweiten Befestigungselement verbunden ist. Mittels dem Rippenelement kann eine stabile Verbindung zwischen dem ersten Befestigungselement und dem zweiten Befestigungselement bereitgestellt werden, wobei weiters auf einfache Weise Leitungsführungsbereiche vorgesehen werden können.

In diesem Zusammenhang kann in Weiterbildung der Erfindung vorgesehen sein, daß das Rippenelement im wesentlichen U-förmig ausgebildet ist. Dadurch kann auch im Bereich des Rippenelementes die Anordnung eines elektrischen Betriebsmittels ermöglicht werden und/oder ein Leitungsführungsbereich von dem Rippenelement begrenzt werden.

Gemäß einer weiteren Ausbildung der Erfindung kann vorgesehen sein, daß an einer ersten Seite zumindest ein erstes Befestigungsmittel für die Befestigung mit einer weiteren Befestigungsvorrichtung und an einer der ersten Seite gegenüberliegenden zweiten Seite zumindest ein mit dem ersten Befestigungsmittel wirkendes zweites Befestigungsmittel angeordnet ist. Dadurch kann ein Zusammenschluß mehrerer erfindungsgemäßer Befestigungsvorrichtungen zu einer größeren Einheit gewährleistet werden, wodurch die Variabilität der möglichen Konfigurationen der elektrischen Betriebsmittel weiter vergrößert wird.

In Weiterführung der Erfindung kann vorgesehen sein, daß zumindest ein drittes Befestigungsmittel für die Befestigung an einer Grundplatte od. dgl. vorgesehen ist. Mit dem dritten Befestigungsmittel kann die erfindungsgemäße Befestigungsvorrichtung auf einfache Weise modular mit einer Grundplatte od. dgl. verbunden werden, wobei einzelne Baugruppen, die auf einer erfindungsgemäßen Befestigungsvorrichtung zusammengefaßt sind, vorverdrahtet und als Einheit verwendet und/oder ausgetauscht werden können.

In diesem Zusammenhang kann in weiterer Ausgestaltung der Erfindung vorgesehen sein, daß das dritte Befestigungsmittel an dem Rippenelement angeordnet ist, wodurch eine besonders einfache Handhabung der Befestigungsvorrichtung erreicht werden kann.

Gemäß einer weiteren Ausführungsform der Erfindung kann vorgesehen sein, daß ein erster Leitungsführungsbereich zumindest teilweise von dem Rippenelement umschlossen ist, wobei der erste Leitungsführungsbereich im wesentlichen parallel zu dem ersten Befestigungselement verläuft. Leitungen können im ersten Leitungsführungsbereich geschützt verlegt werden, wodurch insbesondere die Handhabung der erfindungsgemäßen Befestigungsvorrichtung mit vorverdrahteten Leitungen vereinfacht wird und die Gefahr einer Beschädigung der Leitungen verringert wird.

Gemäß einer anderen Ausgestaltung der Erfindung kann vorgesehen sein, daß angrenzend an dem Rippenelement ein im wesentlichen normal zu dem ersten Befestigungselement verlaufender zweiter Leitungsführungsbereich angeordnet ist. Der zweite Leitungsführungsbereich ermöglicht es, Leitungen zwischen der Bodenplatte od. dgl. und den elektrischen Betriebsmitteln zu verlegen, wobei insbesondere auch Anschlüsse zwischen an der Bodenplatte od. dgl. angeordneten Reihen erfindungsgemäßer Befestigungsvorrichtungen, deren erste Befestigungselemente im wesentlichen parallel und voneinander beabstandet sind, auf einfache Weise herstellbar sind.

In weiterer Ausbildung der Erfindung kann vorgesehen sein, daß ein zumindest bereichsweise von dem Rippenelement und dem ersten Befestigungselement berandeter Verdrahtungsraum vorgesehen ist. Der Verdrahtungsraum stellt die Zugänglichkeit weiterer Anschlüsse der elektrischen Betriebsmittel an der Seite der Hauptverschienung sicher.

Gemäß einer anderen Ausführungsform der Erfindung kann vorgesehen sein, daß im Bereich des ersten Befestigungselements eine Abdeckung der Hauptverschienung angeordnet ist. Die Abdeckung verhindert ein unbeabsichtigtes Kontaktieren und/oder Berühren der Hauptverschienung, wodurch die Sicherheit der erfindungsgemäßen Befestigungsvorrichtung erhöht wird.

In diesem Zusammenhang kann in Weiterführung der Erfindung vorgesehen sein, daß die

Abdeckung einstückig mit dem ersten Befestigungselement ausgebildet ist. Dadurch kann gewährleistet werden, daß die Abdeckung nicht beim Transport od. dgl. verloren gehen kann.

In Weiterbildung der Erfindung kann vorgesehen sein, daß im Bereich des ersten Befestigungselements eine erste Aufnahme für einen ersten Adapter mit einem zungenförmigen Fortsatz und/oder im Bereich des zweiten Befestigungselements eine zweite Aufnahme für einen zweiten-Adapter angeordnet ist. Durch den ersten Adapter und/oder den zweiten Adapter kann eine Befestigung des elektrischen Betriebsmittels ohne Kontaktierung mit der Hauptverschienung sichergestellt werden, wodurch die Variabilität der möglichen Konfigurationen weiter gesteigert werden kann.

In diesem Zusammenhang kann in weiterer Ausgestaltung der Erfindung vorgesehen sein, daß das zweite Befestigungselement mit dem zweiten Adapter zumindest bereichsweise ein im wesentlichen T-förmiges Profil ausbildet. Dadurch können handelsübliche elektrische Betriebsmittel auf einfache Weise an dem zweiten Befestigungselement und dem zweiten Adapter befestigt werden.

Gemäß einer weiteren Ausbildung der Erfindung kann vorgesehen sein, daß die erste Aufnahme und/oder die zweite Aufnahme als Vertiefung ausgebildet ist und wenigstens einen Haltestift umfaßt, wodurch ein einfaches Anbringen und Entfernen des ersten Adapters und/oder des zweiten Adapters ermöglicht wird.

Die Erfindung betrifft weiters eine Hauptverschienung für die Befestigung mit einer oben beschriebenen Befestigungsvorrichtung, mit einem Bandabschnitt und an dem Bandabschnitt angeordneten zungenförmigen Fortsätzen.

Bekannte derartige Hauptverschienungen weisen eine vorgegebene Anordnung an zungenförmigen Fortsätzen auf, wobei insbesondere bei einer Kombination einer Mehrzahl an Hauptverschienungen die Anordnung der einzelnen Phasen fest vorgegeben ist, wodurch die Variabilität der möglichen Konfigurationen eingeschränkt wird.

Aufgabe der vorliegenden Erfindung ist es, eine Hauptverschienung der oben genannten Art anzugeben, bei der die bekannten Nachteile vermieden werden und mit der eine Vielzahl an Schaltungen einfach durchführbar ist, wobei elektrische Betriebsmittel einfach zu Funktionseinheiten zusammengefaßt werden können.

Erfindungsgemäß wird dies dadurch erreicht, daß der Bandabschnitt (62) Sollbruchstellen ausbildende Einkerbungen (63) aufweist und/oder die zungenförmigen Fortsätze (61) Sollbruchstellen ausbildende Einkerbungen (63) zum Entfernen einzelner der zungenförmigen Fortsätze (61) aufweisen. Durch die Sollbruchstellen kann die Hauptverschienung in Abschnitte aufgebrochen werden, wobei für jeden Abschnitt ein eigener Einspeisepunkt vorgesehen sein kann. Weiters ist es möglich, einzelne elektrische Betriebsmittel ohne elektrischen Anschluß an die Hauptverschienung vorzusehen.

In Weiterbildung der Erfindung kann-vorgesehen sein, daß der Bandabschnitt Öffnungen zum Aufnehmen von Halteelementen, insbesondere Schrauben od. dgl., aufweist. Dadurch kann ein einfaches Auswechseln der Hauptverschienung vorgesehen sein, wodurch die Variabilität der möglichen Konfigurationen der elektrischen Betriebsmittel weiter vergrößert wird.

Die Erfindung wird unter Bezugnahme auf die beigeschlossenen Zeichnungen, in welchen Ausführungsformen dargestellt sind, näher beschrieben. Dabei zeigt:
Fig. 1 bis 3 Schrägansichten einer Ausführungsform einer erfindungsgemäßen Befestigungsvorrichtung;
Fig. 4 eine Schrägansicht auf eine weitere Ausführungsform einer erfindungsgemäßen Befestigungsvorrichtung mit einem ersten Adapter und einem zweiten Adapter;
Fig. 5 eine Schrägansicht zweier Befestigungsvorrichtungen nach Fig. 1, die auf einer Bodenplatte befestigt sind;
Fig. 6 bis 8 Schrägansichten drei Befestigungsvorrichtungen nach Fig. 1 mit einer Hauptverschienung, mehreren elektrischen Betriebsmitteln und einer Verkabelung;

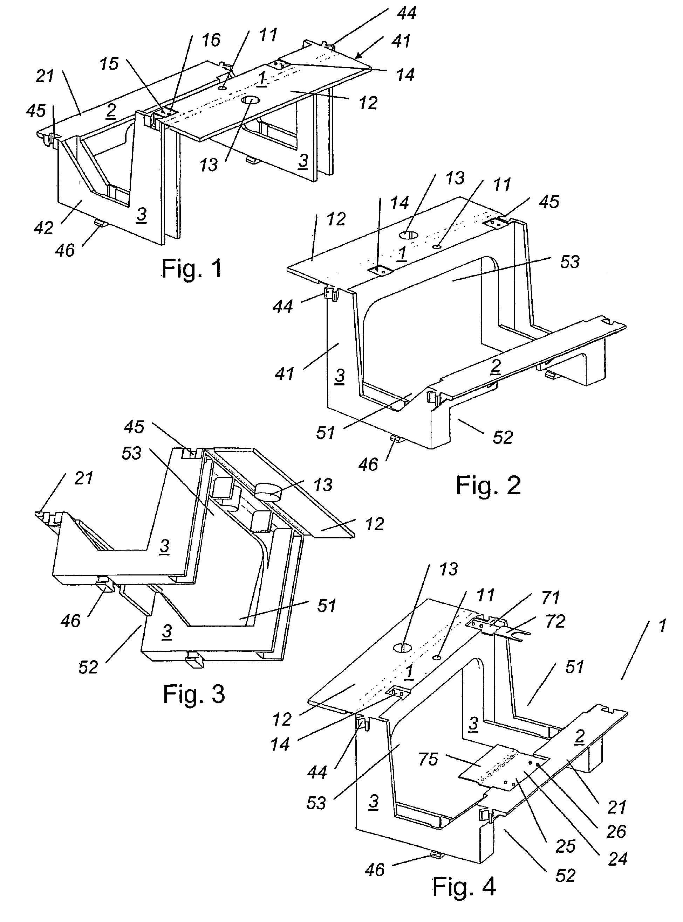

In den Fig. 1 bis 3 ist eine Befestigungsvorrichtung für elektrische Betriebsmittel 8 mit einem ersten Befestigungselement 1 für die Aufnahme einer Hauptverschienung 6 od. dgl., wobei die Hauptverschienung 6 zungenförmige Fortsätze 61 aufweist, und mit einem wenigstens eine Nase 21 aufweisenden zweiten Befestigungselement 2 dargestellt. Das erste Befestigungselement 1 ist balkenförmig ausgebildet.

Die balkenförmige Ausbildung bewirkt eine hohe Festigkeit des ersten Befestigungselementes 1, wobei es möglich ist, einen nur geringen Bereich der elektrischen Betriebsmittel 8 durch das erste Befestigungselement 1 im angeschlossenen Zustand zu verdecken.

Die elektrischen Betriebsmittel 8 können insbesondere als Schutzschalter ausgebildet sein, wobei in anderen Ausführungsformen auch Zähler od. dgl. vorgesehen sein können.

Das zweite Befestigungselement 2 kann ebenfalls balkenformig ausgebildet sein, wodurch ebenfalls eine hohe Festigkeit erreicht werden kann, wobei das elektrische Betriebsmittel 8 im angeschlossenen Zustand weitgehend zugänglich ist.

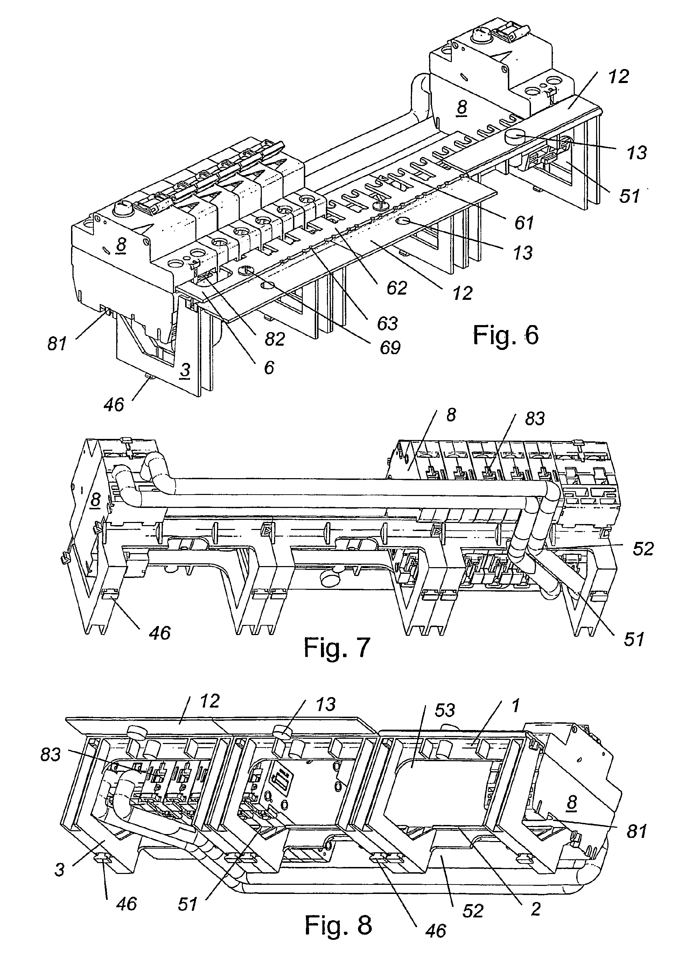

Die in den Fig. 6 bis 8 dargestellten elektrischen Betriebsmittel 8 weisen eine Ausnehmung 81 auf, welche im wesentlichen schwalbenschwanzförmig ausgebildet ist. Weist der Querschnitt des zweiten Befestigungselementes 2 im wesentlichen ein L-Profil auf, so kann ein Rand der Ausnehmung 81 auf einfache Weise mit dem zweiten Befestigungselement 2 in Eingriff gebracht werden. Das erste Befestigungselement 1 ist im Verhältnis zum zweiten Befestigungselement 2 so angeordnet, daß ein erster Anschluß 82 des elektrischen Betriebsmittel 8 mit einer der zungenförmigen Fortsätze 61 der Hauptverschienung verbindbar ist, wenn ein Rand der Ausnehmung 81 mit dem zweiten Befestigungselement 2 in Eingriff ist. Durch das Verbinden des ersten Anschlusses 82 mit der Hauptverschienung kann das elektrische Betriebsmittel 8 einfach, schnell und stabil mit der erfindungsgemäßen Befestigungsvorrichtung verbunden werden.

Dabei kann das elektrische Betriebsmittel 8 im wesentlichen normal zur Längsachse des ersten Befestigungselementes 1 zugeführt werden, wobei weitere bereits mit der Befestigungsvorrichtung verbundene elektrische Betriebsmittel 8 die Befestigung des elektrischen Betriebsmittels 8 nicht behindern. Insbesondere bei Wartungsarbeiten kann sichergestellt werden, daß ein einzelnes elektrisches Betriebsmittel 8 von der erfindungsgemäßen Befestigungsvorrichtung gelöst und repariert und/oder ausgewechselt werden kann, ohne daß weitere elektrische Betriebsmittel 8 von der Befestigungsvorrichtung gelöst werden müssen.

Das erste Befestigungselement 1 ist mit dem zweiten Befestigungselement 2 mittels eines Rippenelementes 3 verbunden. Es können ein Rippenelement 3, zwei Rippenelemente 3, wie in den gezeigten Ausführungsformen, oder auch mehrere Rippenelemente 3 vorgesehen sein.

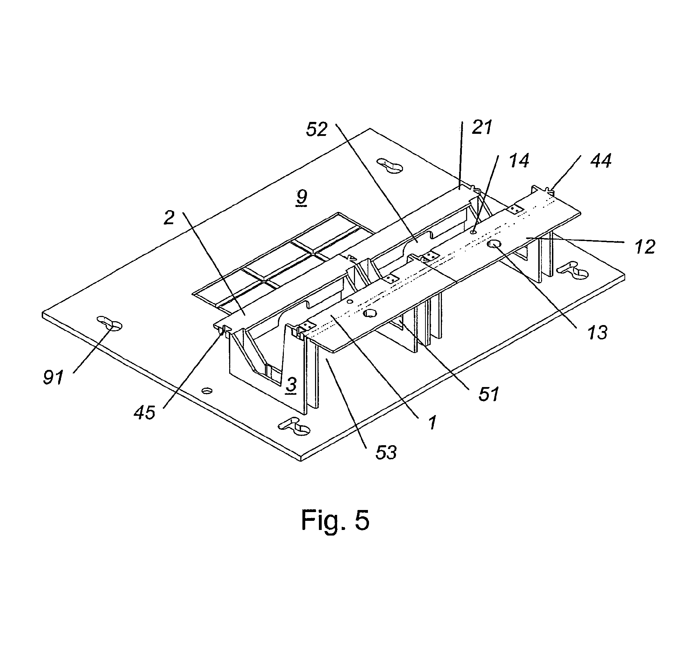

Das Rippenelement 3 kann im wesentlichen U-förmig ausgebildet sein. Wie aus den Fig. 5 bis 8 ersichtlich ist, kann dadurch auf einfache Weise ein erster Leitungsführungsbereich 51 ausgebildet werden, der zumindest teilweise von dem Rippenelement 3 umschlossen ist, wobei der erste Leitungsführungsbereich 51 im wesentlichen parallel zu dem ersten Befestigungselement 1 verläuft.

Weiters kann auf einfache Weise angrenzend an dem Rippenelement 3 ein zweiter Leitungsführungsbereich 52 ausgebildet werden, der im wesentlichen normal zu dem ersten

Befestigungselement 1 verläuft.

Weiters kann ein zumindest bereichsweise von dem Rippenelement 3 und dem ersten Befestigungselement 1 berandeter Verdrahtungsraum 53 vorgesehen sein.

Dabei können insbesondere aufgrund der balkenförmigen Ausgestaltung des ersten Befestigungselementes 1 weitere Anschlüsse 83 der elektrischen Betriebsmittel 8 in dem Verdrahtungsraum 53 zugänglich sein. Dadurch können die Eingänge der elektrischen Betriebsmittel 8 auch mit von der Hauptverschienung 6 unabhängigen Leitungen verbunden werden, wie dies insbesondere aus Fig. 8 ersichtlich ist.

Aus den Fig. 6 bis 8 ist ersichtlich, daß durch den ersten Leitungsführungsbereich 51 und den zweiten Leitungsführungsbereich 52 eine sichere und kompakte Leitungsführung ermöglicht wird.

Werden mehrere elektrische Betriebsmittel 8 auf der erfindungsgemäßen Befestigungsvorrichtung zu Funktionseinheiten zusammengestellt und vorverdrahtet, so kann insbesondere durch die Leitungsführungsbereiche 51, 52 eine kompakte und leicht zu handhabende modulare Funktionseinheit gebildet werden.

Die Befestigungsvorrichtung kann an einer ersten Seite 41 zumindest ein erstes Befestigungsmittel 44 für die Befestigung mit einer weiteren Befestigungsvorrichtung und an einer der ersten Seite 41 gegenüberliegenden zweiten Seite 42 zumindest ein mit dem ersten Befestigungsmittel 44 wirkendes zweites Befestigungsmittel 45 aufweisen. Dadurch können mehrere Befestigungsvorrichtungen zu einer größeren Befestigungsvorrichtung verbunden werden und insbesondere größere Funktionseinheiten gebildet werden.

Die Befestigungsvorrichtung weist weiters dritte Befestigungsmittel 46 für die Befestigung an einer Grundplatte 9 od. dgl. auf. Dadurch kann die Befestigungsvorrichtung modular mit der Grundplatte 9 verbunden werden und insbesondere können Funktionseinheiten modular mit der Grundplatte 9 verbunden werden. Dabei erscheint es günstig, wenn das dritte Befestigungsmittel 46 an dem Rippenelement 3 angeordnet ist. Eine Grundplatte 9 mit zwei damit verbundenen Befestigungsvorrichtungen ist in Fig. 5 dargestellt.

Die Grundplatte 9 kann Öffnungen in der Form eines Schlüsselloches für die Aufnahme der dritten Befestigungsmittel 46 aufweisen. In anderen Ausführungsformen können auch andere Geometrien vorgesehen sein. Weiters kann die Grundplatte 9 Befestigungsöffnungen 91 für die Montage der Grundplatte 9 aufweisen, welche ebenfalls die Form eines Schlüssellochs haben können.

Aus Fig. 5 ist ersichtlich, daß der erste Leitungsführungsbereich 51 und der zweite Leitungsführungsbereich 52 eine Vielzahl an Leitungen aufnehmen kann, wodurch eine einfache und übersichtliche Verlegung von Leitungen sichergestellt ist. Insbesondere kann bei einer Anordnung von mehreren Befestigungsvorrichtungen mit parallelen und beabstandeten ersten Befestigungselementen 1 einfach Anschlüsse zwischen den einzelnen Befestigungsvorrichtungen ausgebildet werden.

In Fig. 6 ist die Hauptverschienung 6 für die Befestigung mit der Befestigungsvorrichtung dargestellt, welche einen Bandabschnitt 62 und an dem Bandabschnitt 62 angeordnete zungenförmige Fortsätze 61 aufweist. An dem Bandabschnitt 62 sind Sollbruchstellen ausbildende Einkerbungen 63 angeordnet. Diese ermöglichen ein Auftrennen der Hauptverschienung 6 in Teilabschnitte, wodurch die Variabilität der möglichen Konfigurationen von Funktionseinheiten erheblich vergrößert wird. Anstelle an den Bandabschnitten 62 können Sollbruchstellen ausbildende Einkerbungen 63 auch an den zungenförmigen Fortsätzen 61 vorgesehen sein.

Durch das Auftrennen in Teilabschnitte können mehrere verschiedene Einspeisepunkte für die Hauptverschienung 6 vorgesehen werden. Weiters kann die Hauptverschienung 6 auf einfache Weise mittels eines Schutzschalters abgesichert werden, wodurch insbesondere eine Sicherung der gesamten Funktionseinheit ausgebildet werden kann.

Das erste Befestigungselement 1 kann eine Gewindebohrung 11 für die Aufnahme eines Halteelementes 69, insbesondere einer Schraube od. dgl., aufweisen, das durch eine Öffnung des Bandabschnittes 62 der Hauptverschienung 6 führbar ist. Dadurch kann die Hauptverschienung 6 auf einfache Weise mit dem ersten Befestigungselement 1 lösbar verbunden werden und gegebenenfalls ausgetauscht werden.

Um einen unbeabsichtigtes Berühren der Hauptverschienung 6 zu verhindern, kann im Bereich des ersten Befestigungselementes 1 eine Abdeckung 12 der Hauptverschienung 6 angeordnet sein, welche insbesondere eine Kappe 13 für das Halteelement 69 aufweisen kann.

Dabei erscheint es günstig zu sein, wenn die Abdeckung 12 einstückig mit dem ersten Befestigungselement 1 ausgebildet ist, wodurch eine unverlierbare Abdeckung 12 bereitgestellt werden kann.

Um die Befestigung eines elektrischen Betriebsmittels 8 an der erfindungsgemäßen Befestigungsvorrichtung sicherstellen zu können, welches nicht mit der Hauptverschienung 6 verbunden ist, kann ein erster Adapter 71 und/oder ein zweiter Adapter 75 vorgesehen sein. Dabei kann im Bereich des ersten Befestigungselementes 1 eine erste Aufnahme 14 für den ersten Adapter 71 mit einem zungenförmigen Fortsatz 72 und/oder im Bereich des zweiten Befestigungselementes 2 eine zweite Aufnahme 24 für den zweiten Adapter 75 angeordnet sein. Die erste Aufnahme 14 und/oder die zweite Aufnahme 24 können als Vertiefung 15, 25 ausgebildet sein, welche wenigstens einen Haltestift 16, 26 umfaßt. Dies stellt eine einfache Ausgestaltung der ersten Aufnahme 14 und/oder die zweite Aufnahme 24 dar.

Der zweite Adapter 75 kann in Verbindung mit dem zweiten Befestigungselement 2 zumindest bereichsweise ein im wesentlichen T-förmiges Profil ausbilden. Dieses kann im wesentlichen dem Hutprofil einer handelsüblichen Trägerschiene für elektrische Betriebsmittel 8 entsprechen, wodurch eine stabile Befestigung des elektrischen Betriebsmittels 8 mittels der Ausnehmung 81 an dem zweiten Befestigungselement 2 und dem zweiten Adapter 75 ermöglicht wird.

Der zungenförmige Fortsatz 72 des ersten Adapters 71 ersetzt den zungenförmigen Fortsatz 61 der Hauptverschienung 6 und ermöglicht ebenfalls eine einfache, schnelle und stabile Befestigung des elektrischen Betriebsmittels 8.

## Patentansprüche

1. Befestigungsvorrichtung für elektrische Betriebsmittel (8) mit einer im wesentlichen schwalbenschwanzförmigen Ausnehmung (81), insbesondere Schutzschalter od. dgl., mit einem länglichen, insbesondere balkenförmigen, ersten Befestigungselement (1) für die Aufnahme einer Hauptverschienung (6) od. dgl. und einem länglichen, insbesondere balkenförmigen, zweiten Befestigungselement (2), wobei das zweite Befestigungselement im Profil wenigstens eine Nase (21) aufweist, **dadurch gekennzeichnet, daß** die Hauptverschienung (6) zungenförmige Fortsätze (61) aufweist und daß das zweite Befestigungselement (2) für den Eingriff mit lediglich einem Rand der Ausnehmung (81) eines der elektrischen Betriebsmittel (8) vorgesehen ist.

2. Befestigungsvorrichtung nach Anspruch 1, **dadurch gekennzeichnet, daß** der Querschnitt des zweiten Befestigungselements (2) im wesentlichen ein L-Profil aufweist.

3. Befestigungsvorrichtung nach Anspruch 1, oder 2, **dadurch gekennzeichnet, daß** zumindest ein Rippenelement (3) vorgesehen ist, das mit dem ersten Befestigungselement (1) und dem zweiten Befestigungselement (2) verbunden ist.

4. Befestigungsvorrichtung nach Anspruch 3, **dadurch gekennzeichnet, daß** das Rippenelement (3) im wesentlichen U-förmig ausgebildet ist.

5. Befestigungsvorrichtung nach einem der Ansprüche 1 bis 4, **dadurch gekennzeichnet, daß** an einer ersten Seite (41) zumindest ein erstes Befestigungsmittel (44) für die Befestigung mit einer weiteren Befestigungsvorrichtung und an einer der ersten Seite (41) gegenüberliegenden zweiten Seite (42) zumindest ein mit dem ersten Befestigungsmittel (44) wirkendes zweites Befestigungsmittel (45) angeordnet ist.

6. Befestigungsvorrichtung nach einem der Ansprüche 1 bis 5, **dadurch gekennzeichnet, daß** zumindest ein drittes Befestigungsmittel (46) für die Befestigung an einer Grundplatte (9) od. dgl. vorgesehen ist.

7. Befestigungsvorrichtung nach Anspruch 6, **dadurch gekennzeichnet, daß** das dritte Befestigungsmittel (46) an dem Rippenelement (3) angeordnet ist.

8. Befestigungsvorrichtung nach einem der Ansprüche 3 bis 7, **dadurch gekennzeichnet, daß** ein erster Leitungsführungsbereich (51) zumindest teilweise von dem Rippenelement (3) umschlossen ist, wobei der erste Leitungsführungsbereich (51) im wesentlichen parallel zu dem ersten Befestigungselement (1) verläuft.

9. Befestigungsvorrichtung nach einem der Ansprüche 3 bis 8, **dadurch gekennzeichnet, daß** angrenzend an dem Rippenelement (3) ein im wesentlichen normal zu dem ersten Befestigungselement (1) verlaufender zweiter Leitungsführungsbereich (52) angeordnet ist.

10. Befestigungsvorrichtung nach einem der Ansprüche 3 bis 9, **dadurch gekennzeichnet, daß** ein zumindest bereichsweise von dem Rippenelement (3) und dem ersten Befestigungselement (1) berandeter Verdrahtungsraum (53) vorgesehen ist.

11. Befestigungsvorrichtung nach einem der Ansprüche 1 bis 10, **dadurch gekennzeichnet, daß** im Bereich des ersten Befestigungselements (1) eine Abdeckung (12) der Hauptverschienung (6) angeordnet ist.

12. Befestigungsvorrichtung nach Anspruch 11, **dadurch gekennzeichnet, daß** die Abdeckung (12) einstückig mit dem ersten Befestigungselement (1) ausgebildet ist.

13. Befestigungsvorrichtung nach einem der Ansprüche 1 bis 12, **dadurch gekennzeichnet, daß** im Bereich des ersten Befestigungselements (1) eine erste Aufnahme (14) für einen ersten Adapter (71) mit einem zungenförmigen Fortsatz (72) und/oder im Bereich des zweiten Befestigungselements (2) eine zweite Aufnahme (24) für einen zweiten Adapter (75) angeordnet ist.

14. Befestigungsvorrichtung nach Anspruch 13, **dadurch gekennzeichnet, daß** das zweite Befestigungselement (2) mit dem zweiten Adapter (75) zumindest bereichsweise ein im wesentlichen T-förmiges Profil ausbildet.

15. Befestigungsvorrichtung nach Anspruch 13 oder 14, **dadurch gekennzeichnet, daß** die erste Aufnahme (14) und/oder die zweite Aufnahme (24) als Vertiefung (15, 25) ausgebildet ist und wenigstens einen Haltestift (16, 26) umfaßt.

16. Hauptverschienung (6) für die Befestigung mit einer Befestigungsvorrichtung nach einem der Ansprüche 1 bis 15, mit einem Bandabschnitt (62) und an dem Bandabschnitt (62) angeordneten zungenförmigen Fortsätzen (61), **dadurch gekennzeichnet, daß** der Bandabschnitt (62) Sollbruchstellen ausbildende Einkerbungen (63) aufweist und/oder die zungenförmigen Fortsätze (61) Sollbruchstellen ausbildende Einkerbungen (63) zum Entfernen einzelner der zungenförmigen Fortsätze (61) aufweisen.

17. Hauptverschienung nach Anspruch 16, **dadurch gekennzeichnet, daß** der Bandabschnitt (62) Öffnungen zum Aufnehmen von Halteelementen (69), insbesondere Schrauben od. dgl., aufweist.

## Claims

1. A fixing apparatus for electric components (8) comprising a substantially dovetail-like recess (81), especially a circuit breaker or the like, comprising an oblong, especially beam-like, first fixing element (1) for receiving a main conductor bar (6) or the like and an oblong, especially beam-like, second fixing element (2), with the second fixing element comprising at least one nose (21) in the profile, **characterized in that** the main conductor bar (6) comprises tongue-shaped projections (61) and that the second fixing element (2) is provided for engagement with merely one edge of the recess (81) of one of the electric components (8).

2. A fixing apparatus according to claim 1, **characterized in that** the cross section of the second fixing element (2) has a substantially L-shaped profile.

3. A fixing apparatus according to claim 1, or 2, **characterized in that** at least one rib element (3) is provided which is connected with the first fixing element (1) and the second fixing element (2).

4. A fixing apparatus according to claim 3, **characterized in that** the rib element (3) is arranged in a substantially U-shaped manner.

5. A fixing apparatus according to one of the claims 1 to 4, **characterized in that** at least a first fixing means (44) for fixing with a further fixing apparatus is arranged on a first side (41) and at least a second fixing means (45) which acts with the first fixing means (44) is arranged on a second side (42) opposite of the first side (41).

6. A fixing apparatus according to one of the claims 1 to 5, **characterized in that** at least a third fixing means (46) is provided for fixing to a base plate (9) or the like.

7. A fixing apparatus according to claim 6, **characterized in that** the third fixing means (46) is arranged on the rib element (3).

8. A fixing apparatus according to one of the claims 3 to 7, **characterized in that** a first lead guidance area (51) is enclosed at least partly by the rib element (3), with the first lead guidance area (51) extending substantially parallel to the first fixing element (1).

9. A fixing apparatus according to one of the claims 3 to 8, **characterized in that** a second lead guidance area (52) is arranged adjacent to the rib element (3), which area extends substantially normal to the first fixing element (1).

10. A fixing apparatus according to one of the claims 3 to 9, **characterized in that** a wiring space (53) is provided which is delimited at least in sections by the rib element (3) and the first fixing element (1).

11. A fixing apparatus according to one of the claims 1 to 10, **characterized in that** a cover (12) of the main conductor bar (6) is arranged in the region of the first fixing element (1).

12. A fixing apparatus according to claim 11, **characterized in that** the cover (12) is arranged integrally with the first fixing element (1).

13. A fixing apparatus according to one of the claims 1 to 12, **characterized in that** a first receptacle (13) for a first adapter (71) with a tongue-shaped projection (72) is arranged in the area of the first fixing element (1) and/or a second receptacle (24) for a second adapter (75) in the area of the second fixing element (2).

14. A fixing apparatus according to claims 13, **characterized in that** the second fixing element (2) forms a substantially T-shaped profile with the second adapter (75) at least in sections.

15. A fixing apparatus according to claim 13 or 14, **characterized in that** the first receptacle (14) and/or the second receptacle (24) are arranged as a depression (15, 25) and comprise at least one retention pin (16, 26).

16. A main conductor bar (6) for fixing with a fixing apparatus according to one of the claims 1 to 15, comprising a strip section (62) and tongue-shaped projections (61) arranged on the strip section (62), **characterized in that** the strip section (62) comprises notches (63) forming preset breaking points and/or the tongue-shaped projections (61) comprise notches (63) forming preset breaking points for removing individual tongue-shaped projections (61).

17. A main conductor bar according to claim 16, **characterized in that** the strip section (62) comprises openings for receiving holding elements (69), especially screws or the like.

## Revendications

1. Dispositif de fixation pour des moyens d'exploitation électriques (8) avec un creux (81) sensiblement en queue d'aronde, en particulier des disjoncteurs de protection ou similaires, avec un premier élément de fixation (1) allongé, en particulier en forme de barre, destiné à recevoir un rail principal (6) ou similaire et un deuxième élément de fixation (2) allongé, en particulier en forme de barre, lequel deuxième élément de fixation présente dans son profil au moins un ergot (21) **caractérisé en ce que** le rail principal (6) présente des saillies en forme de languettes (61) et **en ce que** le deuxième élément de fixation (2) est prévu pour se mettre en prise avec un seul bord du creux (81) de l'un des moyens d'exploitation électriques (8).

2. Dispositif de fixation selon la revendication 1, **caractérisé en ce que** la section du deuxième élément de fixation (2) présente pour l'essentiel un profil en forme de L.

3. Dispositif de fixation selon la revendication 1 ou 2, **caractérisé en ce qu'**il est prévu au moins un élément de nervure (3) qui est relié à un premier élément de fixation (1) et au deuxième élément de fixation (2).

4. Dispositif de fixation selon la revendication 3, **caractérisé en ce que** l'élément de nervure (3) est sensiblement en forme de U.

5. Dispositif de fixation selon l'une des revendications 1 à 4, **caractérisé en ce qu'**il est prévu sur un premier côté (41) au moins un premier moyen de fixation (44) en vue de la fixation à un autre dispositif de fixation et sur un deuxième côté (42) faisant face au premier côté (41) au moins un deuxième moyen de fixation (45) coopérant avec le premier moyen de fixation (44).

6. Dispositif de fixation selon l'une des revendications 1 à 5, **caractérisé en ce qu'**il est prévu au moins un troisième moyen de fixation (46) pour la fixation à une platine de base (9) ou similaire.

7. Dispositif de fixation selon la revendication 6, **caractérisé en ce que** le troisième élément de fixation (46) est disposé sur l'élément de nervure (3).

8. Dispositif de fixation selon l'une des revendications 3 à 7, **caractérisé en ce qu'**une première zone de passage de fils (51) est au moins partiellement entourée par l'élément de nervure (3), la première zone de passage de fils (51) étant sensiblement parallèle au premier élément de fixation (1).

9. Dispositif de fixation selon l'une des revendications 3 à 8, **caractérisé en ce qu'**il est prévu une deuxième zone de guidage de fils (52) contiguë de l'élément de nervure (3) et sensiblement perpendiculaire au premier élément de fixation (1).

10. Dispositif de fixation selon l'une des revendications 3 à 9, **caractérisé en ce qu'**il est prévu un espace de câblage (53) au moins partiellement bordé par l'élément de nervure (3) et le premier élément de fixation (1).

11. Dispositif de fixation selon l'une des revendications 1 à 10, **caractérisé en ce qu'**une couverture (12) du rail principal (6) est disposée au niveau du premier élément de fixation (1).

12. Dispositif de fixation selon la revendication 11, **caractérisé en ce que** la couverture (12) est formée d'un seul tenant avec le premier élément de fixation (1).

13. Dispositif de fixation selon l'une des revendications 1 à 12, **caractérisé en ce qu'**il est prévu au niveau du premier élément de fixation (1) un premier logement (14) pour un premier adaptateur (71) avec une saillie en forme de languette (72) et/ou au niveau du deuxième élément de fixation (2) un deuxième logement (24) pour un deuxième adaptateur (75).

14. Dispositif de fixation selon la revendication 13, **caractérisé en ce que** le deuxième élément de fixation (2) forme avec le deuxième adaptateur (75) au moins par endroits un profil sensiblement en forme de T.

15. Dispositif de fixation selon la revendication 13 ou 14, **caractérisé en ce que** le premier logement (14) et/ou le deuxième logement (24) sont conformés comme des creux (15, 25) et comprennent au moins une goupille de maintien (16, 26).

16. Rail principal (6) destiné à être fixé avec un dispositif de fixation selon l'une des revendications 1 à 15, avec une partie de bande (62) et des saillies en forme de languettes (61) formées sur la partie de bande (62), **caractérisé en ce que** le partie de bande (62) présente des encoches (63) formant des points de rupture et/ou les saillies en forme de languette (61) présentent des encoches (63) formant des points de rupture pour le retrait de certaines des saillies en forme de languette (61).

17. Rail principal selon la revendication 16, **caractérisé en ce que** la partie de bande (62) présente des ouvertures pour recevoir des éléments de maintien (69), en particulier de vis ou similaires.
